# EUROPEAN PATENT APPLICATION

(11) **EP 1 742 145 A2**
(43) Date of publication of application: **10.01.2007**
(21) Application number: 06253586.9
(22) Date of filing: 07.07.2006
(51) Int. Cl.: G06F 3/048

(54) **Menu display apparatus and method**

(30) Priority: 08.07.2005 JP 2005199924
(71) Applicant: NISSAN MOTOR CO., LTD., Yokohama-shi, Kanagawa 221-0023 (JP)
(72) Inventor: Amari, Takeyuki c/o Nissan Motor Co. Ltd.,, Yokohama-shi, Kanagawa, 221-0023 (JP); Hara, Kengo c/o Nissan Motor Co. Ltd.,, Yokohama-shi, Kanagawa, 221-0023 (JP); Saitoh, Tatsuki c/o Nissan Motor Co. Ltd.,, Yokohama-shi, Kanagawa, 221-0023 (JP)
(74) Representative: Holmes, Matthew William

(57) **Abstract**

The present invention provides a menu display device and a menu display method that can provide a menu for easy use by the user. The device has, for example, a liquid crystal display device, CRT or other display part for displaying the menu, a storage part for storing the attributes of at least one user, a user's information database equipped with a job judgment database, etc., a menu judgment database and a display menu judgment part that determines the menu to be displayed on display part on the basis of the user attributes stored in the storage part.

## Description

The present invention pertains to a menu display apparatus and method and particularly, but not exclusively, to an apparatus and method for displaying a menu for a navigation system of a vehicle such as an automobile. Embodiments of the invention relate to an apparatus, to a device, to a method and to a vehicle.

A menu display device is known from, for example, Japanese Kokai Patent Application No. Hei 6[1994]-331379. In this technology, when the list of facilities, etc., is displayed, each is displayed in decreasing order of the number of times it has been selected by the user. Then, the user makes use of the list to select and display information about the facilities, etc.

In the known technology, display is performed on the basis of the priority in the operation history. Consequently, when there is insufficient operation history, it is impossible to display the menu items on the basis of priority, and it becomes difficult to use the system effectively.

It is an aim of the invention to improve upon such known technology. Aspects of the invention address the above-mentioned problems by providing a menu display device and a menu display method that can present a menu able to be used easily by the user. Other aims and advantages of the invention will become apparent from the following description, claims and drawings.

Aspects of the invention therefore provide an apparatus, a method and a vehicle as claimed in the appended claims.

According to another aspect of the invention there is provided a menu display device for a vehicle, comprising a display device that displays a menu, a controller connected to the display device and a storage device operable to store at least one user attribute of a user and connected to the controller, wherein the controller is operable to determine the menu for display on the display device on the basis of the at least one user attribute stored in the storage device.

In an embodiment, the at least one user attribute includes an occupation of the user.

In an embodiment, a type of industry or a job type indicates the occupation of the user.

In an embodiment, the at least one user attribute includes a life schedule.

In an embodiment, the storage device includes attributes of multiple users; and wherein the controller is operable to switch the menu displayed on the display device corresponding to the user.

The device may comprise a database for determining the menu on the basis of the at least one user attribute.

The device may comprise a communication medium operable to download a life schedule of the user to the storage device.

According to another aspect of the invention there is provided a menu display device for use in a navigation device of a mobile terminal of a vehicle, the device comprising display means for displaying a menu, storage means for storing an attribute of at least one person and determining means for determining the menu for display on the display means on the basis of the attribute of the at least one person.

In an embodiment, the attribute is an occupation of the at least one person.

In an embodiment, a type of industry or a job type indicates the occupation of the at least one person.

In an embodiment, the attribute is a life schedule of the at least one person.

The device may comprise communication means for downloading the life schedule of the at least one person.

In an embodiment, the storage means for storing an attribute of at least one person further comprises means for storing attributes of multiple persons; and wherein the determining means further comprises means for switching a menu displayed on the display means corresponding to one of the multiple persons identified as a user.

The device may comprise database means for determining an appearance of the menu on the basis of the attribute.

According to a further aspect of the invention there is provided a menu display method used with a navigation device of a mobile terminal of a vehicle, the method comprising storing attributes of at least one user, and determining a menu for display with the navigation device on the basis of a stored user attribute for a single user.

The method may comprise displaying the menu determined on the basis of the stored user attribute for the single user.

In an embodiment, storing attributes of at least one user further includes storing attributes of multiple users. In an embodiment, the method further comprises switching the menu for display corresponding to an attribute of a second user.

According to a still further aspect of the invention there is provided a menu display method for a vehicle, comprising storing at least one attribute of multiple potential users, storing different menus corresponding to the at least one attribute for each of the multiple potential users and displaying a respective menu based on an attribute of a single user.

In an embodiment, the at least one attribute includes at least one of a respective occupation and a life schedule of the multiple potential users.

The method may comprise downloading the life schedule of at least one of the multiple potential users.

Embodiments of the invention provide a menu display device and method. Accordingly, described herein is a menu display device for a vehicle that comprises, for example, a display device that displays a menu, a controller connected to the display device and a storage device operable to store at least one user attribute of a user and connected to the controller. The controller is operable to determine the menu for display on the display device on the basis of the at least one user attribute stored in the storage device.

Also described herein is a menu display device for use in a navigation device of a mobile terminal of a vehicle. The device includes, for example, display means for displaying a menu, storage means for storing an attribute of at least one person and determining means for determining the menu for display on the display means on the basis of the attribute of the at least one person.

Methods disclosed herein include a menu display method used with a navigation device of a mobile terminal of a vehicle. By example, the method comprises storing attributes of at least one user and determining a menu for display with the navigation device on the basis of a stored user attribute for a single user.

Another menu display method for a vehicle includes, for example, storing at least one attribute of multiple potential users, storing different menus corresponding to the at least one attribute for each of the multiple potential users and displaying a respective menu based on an attribute of a single user.

Within the scope of this application it is envisaged that the various aspects, embodiments and alternatives set out in the preceding paragraphs, in the claims and in the following description, may be taken individually or in any combination thereof.

The present invention will now be described, by way of example only, with reference to the accompanying drawings in which:
Figure 1 is a diagram illustrating a menu display device embodying the invention;
Figure 2 is a diagram illustrating the "Simple Menu" displayed on the screen in this embodiment;
Figure 3 is a diagram illustrating the display portion, operation portion, etc., in this embodiment;
Figures 4A-4B are diagrams illustrating an example of inputting user information after purchase of the vehicle by the user;
Figure 5 is a flow chart illustrating the menu display device in this embodiment;
Figure 6 is a diagram illustrating an example of the contents of the occupation judgment database;
Figure 7 is a diagram illustrating an example of the contents of the day-off judgment database;
Figure 8 is a diagram illustrating an example of the contents of the current site judgment database;
Figure 9 is a diagram illustrating an example of the contents of the menu judgment database;
Figures 10A-10C are diagrams illustrating an example of the normal menu;
Figure 11 is a diagram illustrating another example of the "Simple Menu" displayed on the screen; and
Figure 12 is a diagram illustrating an example of display after selection of the destination.

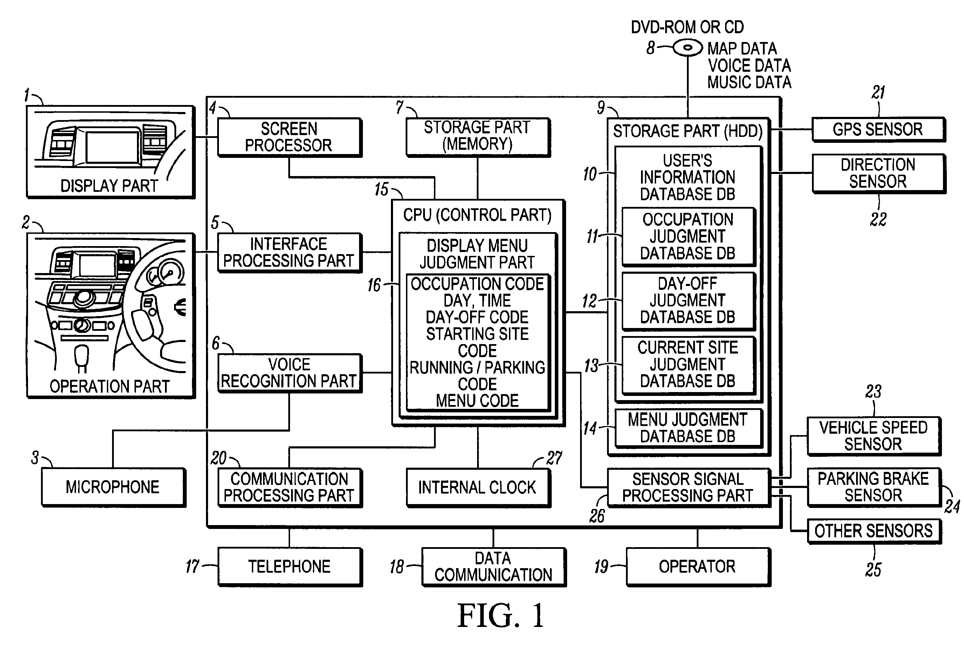

Figure 1 is a diagram illustrating one embodiment of a menu display device, such as a vehicle onboard navigation device, etc. In this figure are shown display part 1, such as liquid crystal display device or CRT, operation part (steering switch) 2, microphone 3, graphics processor 4, interface processing part 5, voice recognition part 6, recording part (memory) 7; DVD-ROM or CD 8, storage part (HDD) 9, user information database 10, occupation judgment database 11, day-off judgment part 12, current-site judgment part 13, menu judgment part 14, CPU (central processing unit) 15, display menu judgment part 16, telephone 17, data communication 18, operator 19, communication processing part 20, GPS (Global Positioning System) sensor 21, direction sensor 22, vehicle speed sensor 23, parking brake (PKB) sensor 24, other types of sensors 25, sensor signal processing part 26, and interval clock 27. Each of these is described in more detail hereinbelow.

Display part 1 displays the current map for running of the vehicle, the current position and direction of the vehicle, the operation menu, etc. By example, operation part 2 is set on the steering wheel, and it is the operation part for displaying the menu.

Microphone 3 is for input of sentences spoken by the user. Voice recognition part 6 recognizes the voice input from microphone 3.

DVD-ROM or CD 8 stores map data, voice data, music data, etc.

Storage part 9 is the storage part consisting of a hard disk. CPU 15 controls the overall device, and it has display menu judgment part 16 that performs the function of determining the menu to be displayed as described in more detail below.

In this example, communication processing part 20 processes communication from various communications media such as telephone 17, data communication 18, operator 19, etc. GPS sensor 21 performs operations on the basis of electromagnetic waves from multiple satellites received with a GPS antenna, and it determines the position (latitude and longitude) of the vehicle.

Figure 1 includes a number of sensors. Direction sensor 22 detects the moving direction of the vehicle. Vehicle speed sensor 23 detects the speed of the vehicle corresponding to the rotating speed of the wheels of the vehicle. Parking brake sensor 24 detects the state of the parking brake. The various types of unspecified sensors 25 can include, for example, sensors that detect the running state of the vehicle such as reverse switch, light switch, etc. Sensor signal processing part 26 computes the running distance from the vehicle speed signal from vehicle speed sensor 23. Sensor signal processing part 26 also detects the running state of the vehicle on the basis of the signal from parking brake sensor 24 and various types of sensors 25, and it generates the signals needed for control.

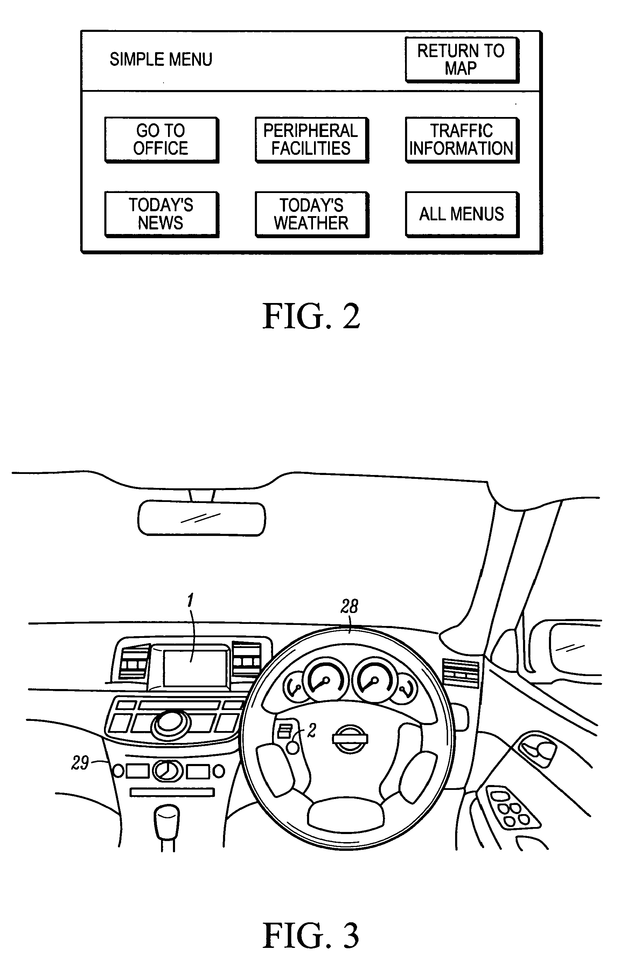

Figure 2 is a diagram illustrating a so-called "Simple Menu" displayed on the screen of display part 1 in this embodiment. In this example, the following items are displayed as selectable items: go to office, peripheral facilities, traffic information, today's news, today's weather and total or all menus. The selection "Return to map" is displayed next to the title "Simple Menu."

Figure 3 is a diagram illustrating display part 1 and operation part 2 (steering wheel switch) in this embodiment. In this figure, shown are the steering wheel 28 and the cluster lid 29. Operation part 2 that displays "Simple Menu" can be placed on the steering wheel 28 as shown. However, it is also possible to place the operation part (switch) for displaying "Simple Menu" on cluster lid 29.

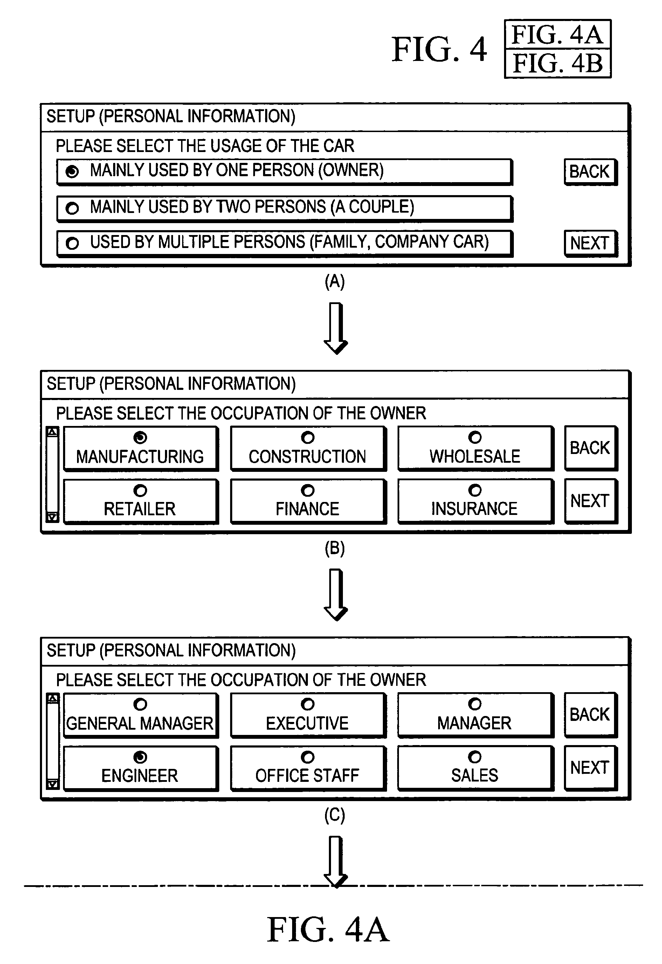

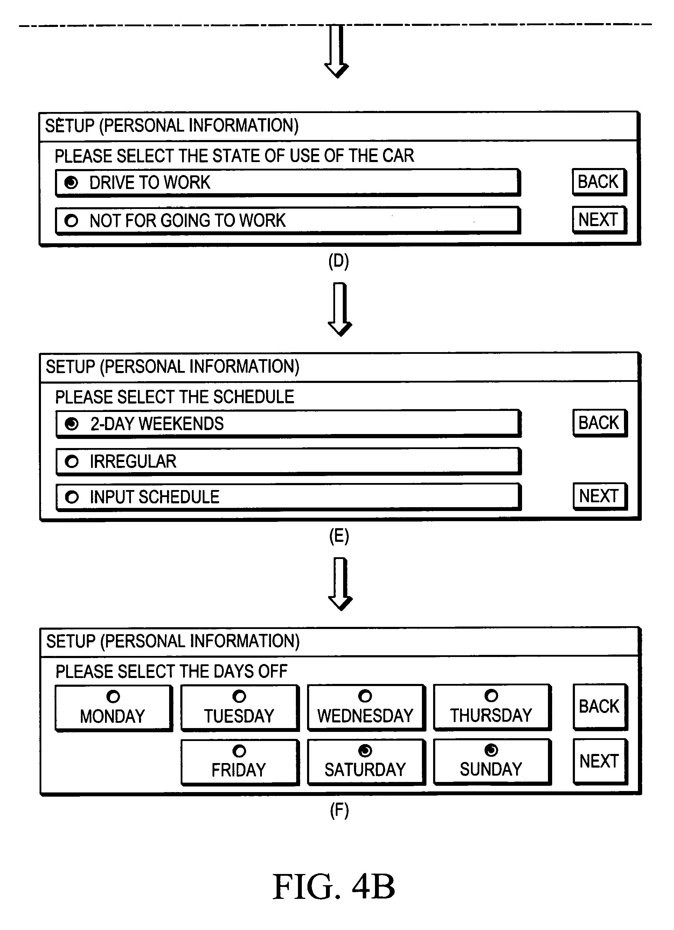

Displays illustrated in (A)-(F) of Figure 4 are examples of user information input. The user shown here is an employee of a company (manufacturing industry, engineer, with two weekend days off). Also, in this embodiment, the occupation and job type are judged. First, for setup screen (A), the usage of the vehicle is input. In the example shown here, from the three options of "mainly used by one person (owner)," "mainly used by two persons (a couple)," and "used by multiple persons (family, company)," "mainly used by one person (owner)" is selected.

After selection in this screen, "Next" is pressed to go to the next screen (same in the following).

Then, on setup screen (B), the occupation of the owner (user) is input. From the many options of "manufacturing," "construction," "wholesale," "retail," "finance," "insurance," etc., "manufacturing industry" is selected in this example.

On setup screen (C), the job type of the owner is input. From the many options of "general manager," "senior executive," "manager," "engineer," "office staff," "sales," etc., in this example "engineer" is selected.

Next, on setup screen (D), the state of use of the vehicle by the owner is input. From the two options of "used for going to work" and "not used for going to work," in this example "used for going to work" is selected.

On the setup screen (E), the work schedule is input. From the three options of "2-day weekend," "irregular" and "input schedule," in this example "2-day weekend" is selected.

Then, on setup screen (F), the days off are input. From the seven options of Monday through Sunday, in this example two days, that is, "Saturday" and "Sunday" are selected.

Also, on the occupation setup screen (B) of Figure 4, the selections of service, student, homemaker and jobless are included. And, in the job types shown in screen (C) of Figure 4, student and homemaker, etc., are included.

Employee is selected in this example. However, suppose for example that "service industry" is selected on screen (B), and "general manager" is selected on screen (C), the job may also be designated "self-employed."

Also, when "jobless" is selected on screen (B), and "student" is selected on screen (C), the job may be designated "jobless."

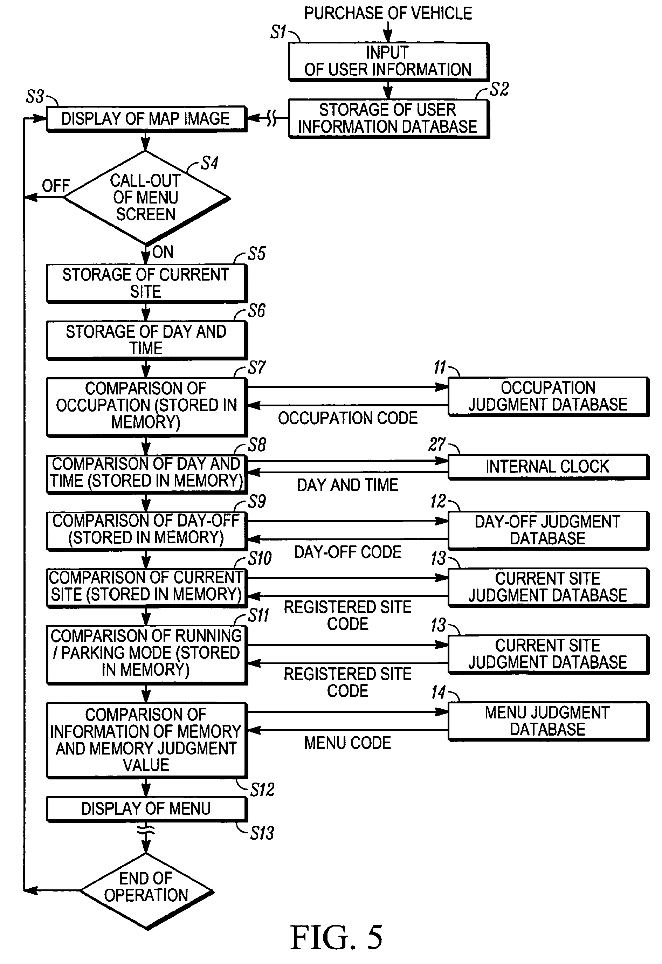

Figure 5 is a flow chart illustrating the flow of operation of the user and the processing of CPU 15 in Figure 1 with respect to the menu display device in this embodiment. Hence, description of components of the menu display device are made with reference to Figure 1. Note that CPU 15 can represent not only a conventional microprocessor, but can be any type of controller including a conventional microcontroller.

First, after purchase of the user's vehicle, the user inputs the prescribed personal user information as shown in Figure 4 on the menu display device in step S1. In step S2 the user information is stored in user information database 10. Then, during running (operation) of the vehicle, the map image is displayed on display part 1 in step S3.

Next, by means of the operation using operation part 2 by the user, a judgment is made by the CPU 15 as to whether the menu screen is to be called up. If the menu screen is not to be called up, the program returns to the map display of step S3. When there is call-up of the menu screen, the program advances to step S5.

In step S5 the current site of the vehicle is recorded in recording part (memory) 7. Next, in step S6 the current day and time are recorded in recording part 7.

Then, in step S7 occupation judgment database 11 of user information database 10 and the job indicated by the job code are compared, and the result of the comparison is recorded in recording part 7. In step S8 internal clock 27 is compared with the date and time, and the date and time resulting from the comparison is recorded in recording part 7.

Next, in step S9 day-off judgment database 12 is compared with the days off represented by the day-off code, and the days-off resulting from the comparison are recorded in recording part 7.

Current site judgment database 13 is compared with the current site represented by the current site code in step S 10, and the current site of the comparison result is recorded in recording part 7. Similarly, current site judgment database 13 is compared with the running/parking mode represented by the current site code, and the running/parking mode as the result of the comparison is recorded in recording part 7.

Next, in step S12 menu judgment database 14 is compared with the information and menu judgment value recorded in recording part 7 represented by the menu code. On the basis of the comparison result in step S12, the prescribed menu is displayed on display part 1 in step S 13, and in step S 14 the operation comes to an end.

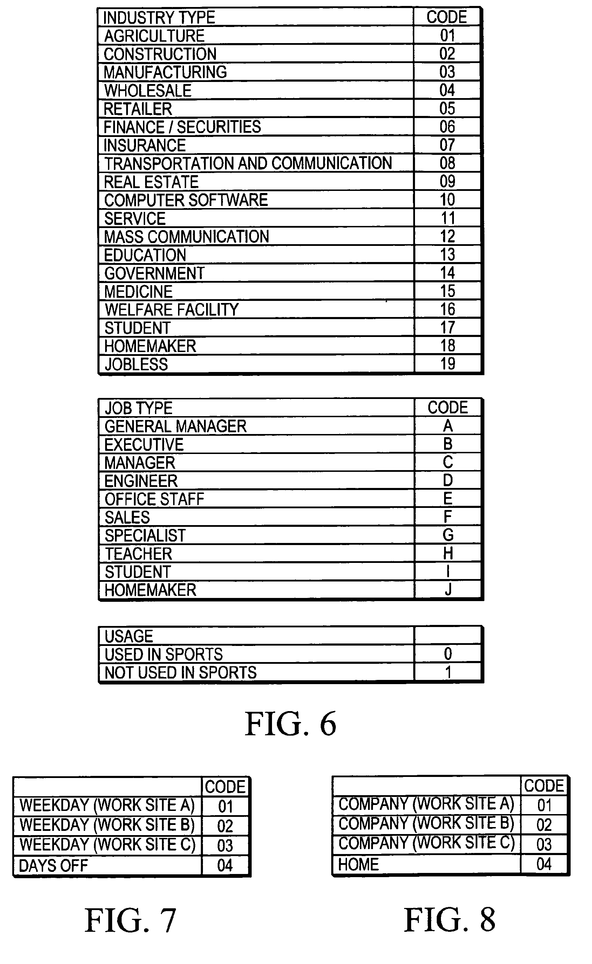

Figure 6 is a diagram illustrating an example of the contents of occupation judgment database 11. As shown in Figure 6, the contents of occupation judgment database 11, such as occupation, job type, vehicle's usage, as well as their related codes, are stored.

Figure 7 is a diagram illustrating an example of the contents of day-off judgment database 12. As shown in Figure 7, the contents of day-off judgment database 12, such as weekday, or working day, (work site A), working day (work site B), working day (work site C), and day off have their codes stored.

In this way, judgment is made on the basis of the data of the planned day-off or schedule stored in day-off judgment database 12. Also, the schedule has the priority.

Figure 8 is a diagram illustrating an example of the contents of current site judgment database 13. As shown in Figure 8, the contents of current site judgment database 13 store the codes of, say, work site A of a company, work site B of the company or another company, work site C of the company or another company and home.

Also, when the distance between the current site and the registered sites (work sites A-C) stored in current site judgment database 13 and the site registered as home is within 1 km, it is decided that they correspond to each other.

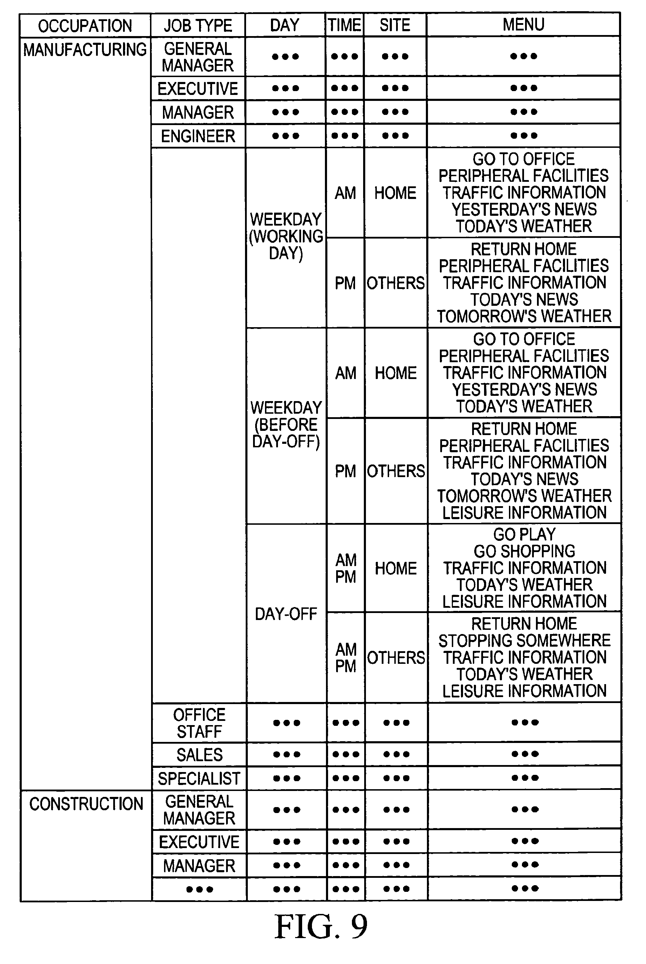

Figure 9 is a diagram illustrating an example of the contents of menu judgment database 14. As shown in Figure 9, the contents of menu judgment database 14 store the occupation, job, day, time, and site and the menu selected corresponding to them. Here, an example of the user as an employee (manufacturing, engineer, 2 weekend days off) will be presented.

For example, if the time is AM on a weekday (i.e., a working day), and the site is the home, the menu displays "go to office," "peripheral facilities," "traffic information," "yesterday's news" and "today's weather."

On the other hand if the time is PM on a weekday, and the site is not home ("other"), the menu displays "return home," "peripheral facilities," "traffic information," "today's news" and "tomorrow's weather."

When the time is AM in a weekday (before a day off), and the site is home, the menu becomes "go to office," "peripheral facilities," ''traffic information," "yesterday's news" and "today's weather."

When the time is PM on a weekday (before a day-off), and the site is not home ("others"), the menu becomes "return home," "peripheral facilities," "traffic information," "today's news," "tomorrow's weather" and "leisure information."

When the time is AM on a weekend day, and the site is home, the menu displays "go out," "go shopping," "traffic information," "today's weather" and "leisure information."

When the time is PM on a weekend day, and the site is not home ("others"), the menu becomes "return home," "stopping somewhere" or "drive to a nearby road," "traffic information," "today's weather" and "leisure information."

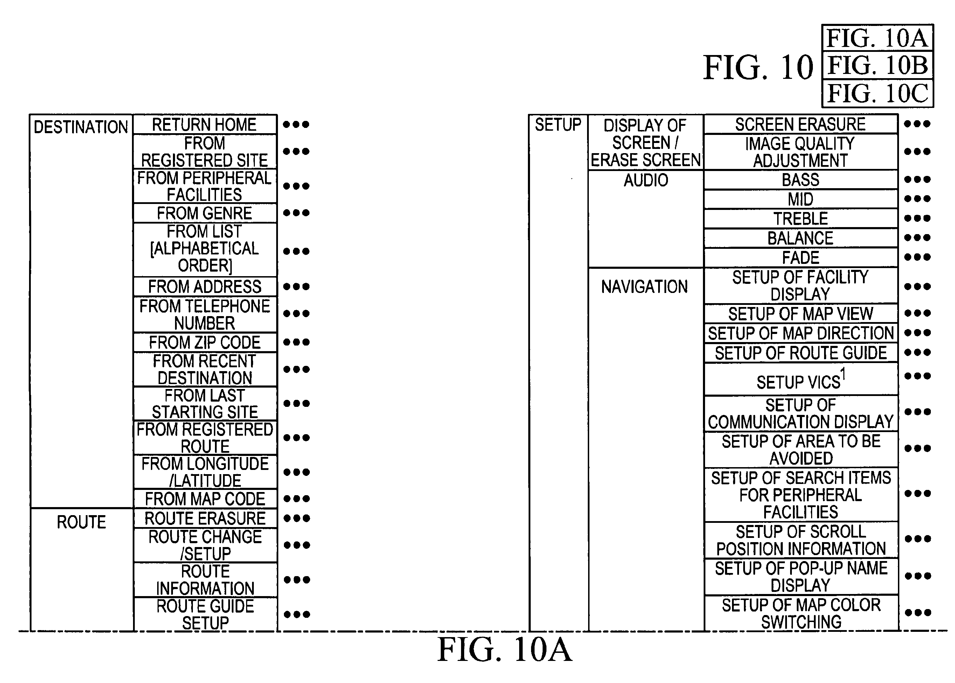

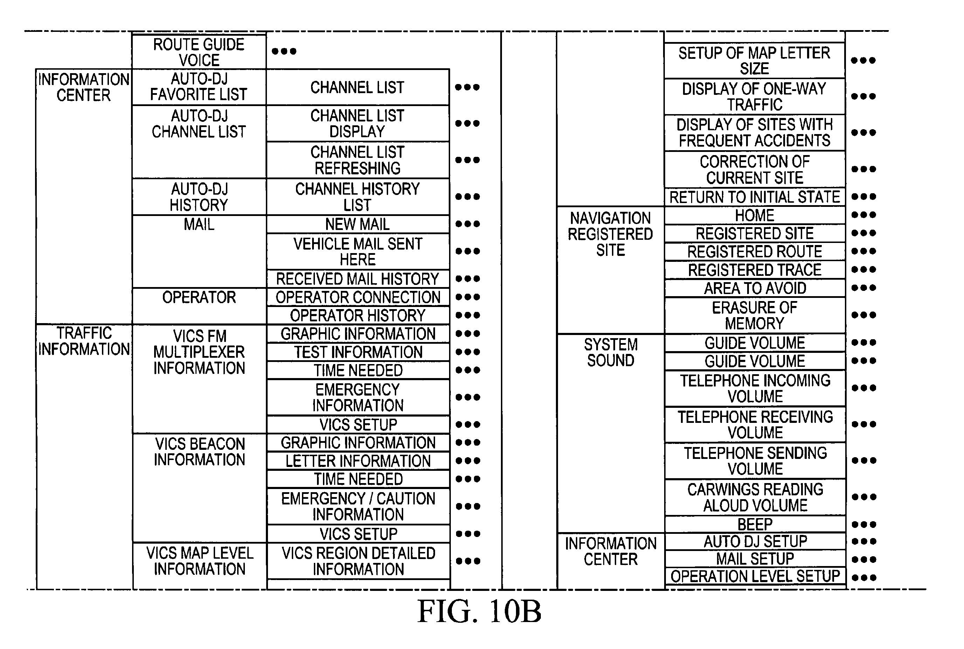

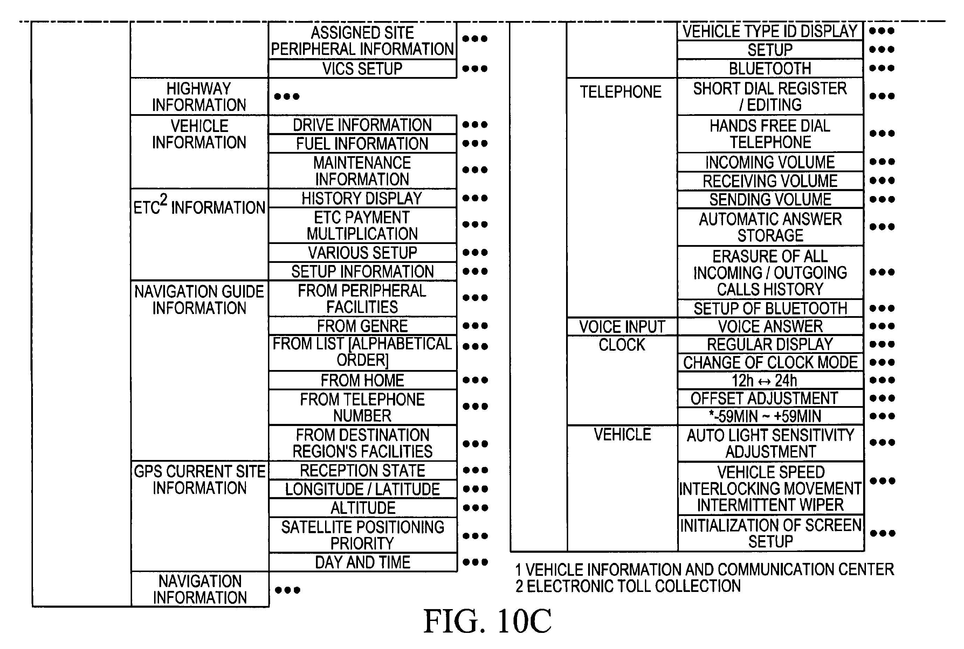

Figure 10 illustrates an example of a normal menu. In this embodiment, for example, for the menu display device such as vehicle onboard navigation device, etc., the information about the owner or other user, such as occupation, job, planned day off, work site (company), home, etc., is input and registered in the menu display device when the vehicle is purchased.

Then, on the basis of the information about date, day, and time from internal clock 27, and the information about the current site from GPS sensor 21 and vehicle speed sensor 23, the user selects the necessary menu for display on display part 1.

This menu display device has the following parts: user's information database 10 having occupation judgment database 11, days off judgment database 12 and current site judgment database 13 having user's job, days off, current site, menu and other pattern information; menu judgment database 14; storage part 9 that records the job, current time and site (or recording part 7); and display menu judgment part 16 that extracts the necessary menu from the user's information recorded in storage part 9 and the pattern information of user's information database 10.

The user inputs his or her personal information with the aid of a menu after purchase of the vehicle as shown in screens (A)-(F) of Figure 4.

The information input includes the codes classified by occupation judgment database 11 (occupation, job, vehicle's usage) shown in Figure 6, the codes of working days and days classified by day off judgment database 12, and the information about schedule, and is stored in storage part 9 (or recording part 7).

As shown in Figure 3, after the user inputs the information the user actuates operation part 2 on steering wheel 28 or the like of the vehicle for displaying "Simple Menu" shown in Figure 2 on display part 1. The signal is sent to the main body of the menu display device.

When the button of operation part 2 is pressed, on the basis of the planned days off and the schedule information stored in storage part 9, day off judgment database 12 shown in Figure 7 is taken as reference, and the corresponding code is recorded in recording part 7.

Also, the information about the current site and the information about the registered site are compared, and the corresponding code in current site judgment database 13 shown in Figure 8 is recorded in recording part 7. On the basis of these codes, display menu judgment part 16 uses menu judgment database 14 shown in Figure 9 as reference, extracts the corresponding menu data, and displays the menu screen shown as an example in Figure 2 and corresponding to the user attribute on display part 1. Also, the menu is usually displayed with a specified construction composed of multiple menus as shown in Figure 10.

For example, suppose the user is an engineer in the manufacturing industry, has Saturday off and drives the car to work on weekdays. Each weekday, the user drives the car to the company, and there should be a menu of the peripheral facilities and traffic information on the way to the company. In the evening, the user drives home or may stop somewhere. Consequently, the information about the peripheral facilities and today's news tends to be necessary. On a day off, the situation becomes entirely different from that on the weekday in that the user drives the car for shopping and leisure. Consequently, a menu for destination setup, leisure information, weather forecast, etc., tends to be needed.

If the user is a homemaker, the user typically drives the car on weekdays for shopping and family tasks, etc.

If the user is self employed or the car is owned by the company, usually the user usually drives to the customers and to his/her own shop (or company) on weekdays.

If the user is a taxi driver or driver in the transportation industry, and the car is used for that purpose, the user usually searches addresses and telephones as a characteristic feature.

On days off, there is no consistent pattern of use of the cars. The user may set up a schedule or determine the menu from the data of a correct schedule.

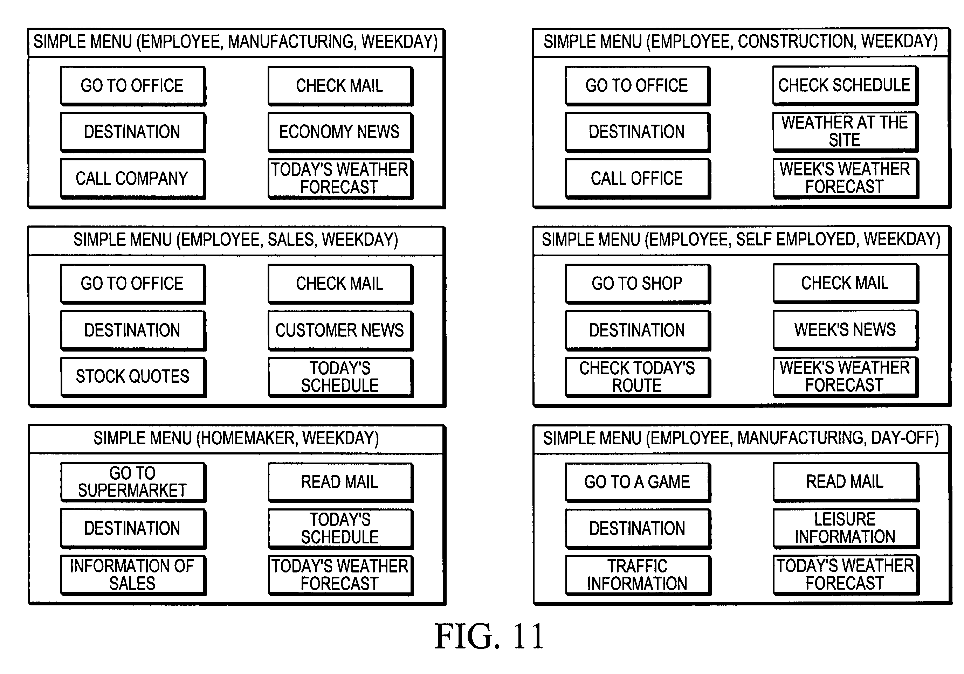

Figure 11 illustrates examples of specific display of the "Simple Menu" shown in Figure 2.

In the case of employee, manufacturing industry and weekday, for example, the menu may include "go to office," "destination," "call the company," "check mail," "business news" or "economy news," "today's weather forecast," etc.

In the case of employee, construction industry and weekday, the menu may include "go to office," "destination," "call office," "check schedule," "weather at the site," "week's weather forecast," etc.

In the case of employee, sales industry and weekday, the menu may include "go to office," "destination," "stock quotes," "check mail," "customer news," "today's schedule," etc.

In the case of self-employed and weekday, the menu may include "go to the shop," "destination," "check today's route," "check mail," "week's news," "week's weather forecast," etc.

In the case of a homemaker and weekday, the menu may include "go to supermarket," "destination," "information about sales," "read mail," "today's schedule," "today's weather forecast," etc.

In the case of an employee, manufacturing industry and day-off, the menu may include "go to a game," "destination," "traffic information," "read mail," "leisure information," "today's weather forecast," etc.

Of course, the user sets up the above listed menus as suits him or her.

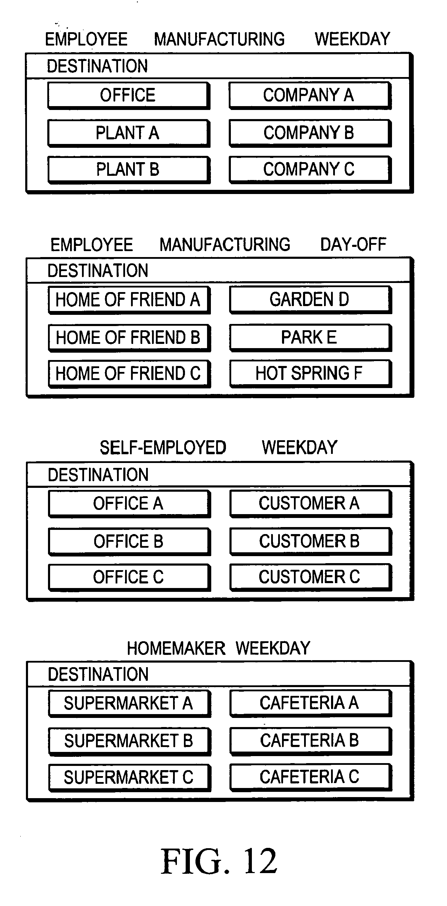

Figure 12 is a diagram illustrating an example in which users having different jobs and different driving times select the same item name in the "Simple Menu" so that in the layer below the selected item, different menu items and pages matched to their jobs and driving times are displayed. That is, in Figure 12, the menu displays different jobs and driving times after selection of "destination" displayed as the item in the "Simple Menu" for the different users as shown in Figure 11.

For example, in the case of an employee, manufacturing industry and weekday, the possible destinations include "office," "Plant A," "Plant B," "Company A," "Company B" and "Company C."

On the other hand, in the case of an employee, manufacturing industry and day-off, the possible destinations include "home of friend A," "home of friend B," "home of friend C," "garden D," "park E" and "hot spring F."

In the case of a homemaker and weekday, the possible destinations include "supermarket A," "supermarket B," "supermarket C," "cafeteria A," "cafeteria B" and "cafeteria C."

For users of different attributes and at different driving times, the "Simple Menu" in this embodiment has different items for selection of "destination" in the menu corresponding to the different attributes and driving times. Each user can select a different "destination" that will be displayed corresponding to the user on the next level of the display.

In addition, the common item is not limited to the "destination." Menu items other than "destination" may also be displayed in a like manner on the "Simple Menu." For all menu items, different users under different circumstances have different next-layer displays, respectively.

Also, as the next-layer display, in addition to the items from the selection form a page displaying any other information may also be displayed.

As explained above, the menu display device includes by example display part 1 that displays the menu, storage part 9 that stores the attributes of at least one user and display menu judgment part 16 that determines the menu to be displayed on display part 1 on the basis of the user attributes stored in storage part 9. Here, user attributes include the user's occupation, job, and days off, life schedule, hobbies, and other personal information.

Also, in a menu display method the attributes of at least one person can be stored, and on the basis of the stored user attributes the menu to be displayed on display part 1 is determined.

In a known vehicle onboard navigation device, in order to facilitate use by all of the users, the priority for the menu display is determined. Also, for the conventional menu design, there are many menus that can be displayed in order to contain the functions requested by all of the users. This results in a large number of items that can be selected (a large number of display buttons, display switches, etc., and it is necessary to display the menus that are little used by certain users. Also, in order to facilitate use, it is necessary to reduce the number of operation steps to as few as possible. Consequently, many options are present in the menu on opening. As the number of functions has been increased, the number of the options that can be selected on opening has been increased. Consequently, the number of the options of the items for selections and the number of the layers of the menu are large, and the operation became more difficult. In addition, according to known devices the prediction information is computed on the basis of the operation history information, so that the quality of the information for analysis is large, and the processing load is heavy.

On the other hand, in embodiments according to the present invention, the attributes of occupation, etc., of the user are taken as the base for judgment rather than the operation history information as adopted in the prior art, and only the menu that is believed to be frequently in use is displayed on display part 1. It is preferred that the displayed menu be fixed for each user attribute, such as occupation, etc., and the items of the menu that can be selected also be limited to the minimum number necessary for display on the basis of the frequency of use for each attribute, such as occupation, etc. In this way, for example, the menu is determined on the basis of user attributes, such as occupation, working days and times for each occupation, etc. As a result, it is possible to present a menu that can be easily used, while it is possible to reduce the number of the items that can be selected by the user and the number of layers. Consequently, it is possible to avoid problems of the prior art, that is, insufficient operation history information so that incorrect information is presented, or an undesired menu is presented. As a result, it is possible to present the essential information with fewer items, which can be selected correctly by the user. Also, while the functions have been increased, the number of items that can be selected by the user on the screen can be reduced, so that the convenience of the user can be improved.

In addition, as explained above, undesired processing by means of CPU 15 or other hardware can be reduced, and the system processing efficiency is increased.

The user attribute may be the occupation. As a result, it is possible to present a menu that can be used easily on the basis of the occupation of the user.

Also, the user attribute may be the life schedule. As a result, it is possible to present a menu that can be used easily on the basis of the life schedule of the user.

For the menu display device described herein, when multiple users are stored in storage part 9, display menu judgment part 16 switches the menu displayed on display part 1 corresponding to the user. Also, for the menu display method described herein, when the attributes of multiple users are stored the menu displayed on display part 1 is switched corresponding to the stored user. As a result, it is possible to present easily usable menus to each of the multiple users so that the convenience for the user can be further improved. In this way, when multiple users perform setup (registration) of the menu display device, the user who is using the system can be identified, and the menu can be switched on the basis of the identification. Also, identification of the user can be realized by means of keyless entry, personal identification, input by the user, detection of the position of the driver's seat, etc.

Also, the database for determining the menu on the basis of the user attributes can be the user information database having occupation judgment database 11, day-off judgment database 12 and current site judgment database 13, and it has menu judgment database 14. For example, on the basis of the occupation according to job judgment database 11 that classifies the occupations of the users, the schedule of weekdays/days off according to day-off judgment database 12, time according to internal clock 27 and site according to current site judgment database 13, the information is read from menu judgment database 14 that stores the previously prepared menu patterns, and the menu is displayed. By inputting the individual personal information, the menu display device can predict the menu for the user with high reliability on the basis of the day and time and the current site information, etc., in the database. As a result, the input becomes simpler, and it is possible to automate the menu presentation with a low processing load on the system.

Also, the life schedule of the user can be downloaded via a communication medium to storage part 9. That is, the life schedule information to be input by the user to the menu display device can be downloaded by means of the cell phone in the car or other wired or wireless communication means from the software that manages the life schedule in the external PDA, personal computer, cell phone, or the like, into the menu display device. In this way, by acquiring the life information schedule from the outside, it is possible to present a high-precision menu on the basis of correct information for weekdays and days off.

Also, the above-described embodiments have been described in order to allow easy understanding of the present invention and do not limit the present invention. On the contrary, the invention is intended to cover various modifications and equivalent arrangements included within the scope of the appended claims, which scope is to be accorded the broadest interpretation so as to encompass all such modifications and equivalent structure as is permitted under the law.

This application claims priority from Japanese Patent Application Serial No. 2005-199924, filed 8th July 2005, the contents of which are incorporated herein by reference.

## Claims

1. An apparatus for displaying a menu comprising:
display means for displaying the menu;
control means for controlling the display device; and
storage means connected to the control means for storing at least one user attribute of a user, wherein the control means is arranged to determine the menu for display on the display device in dependence on the at least one user attribute.

2. An apparatus as claimed in claim 1 wherein the at least one user attribute includes one or more of:
an occupation of the user;
a type of industry or a job type of the user; and
a life schedule of the user.

3. An apparatus as claimed in claim 1 or claim 2 wherein the storage means includes at least one user attribute for each of a plurality of users and wherein the control means is arranged to switch the menu displayed on the display means corresponding to a current user.

4. An apparatus as claimed in any preceding claim comprising database means for determining the menu on the basis of the at least one user attribute.

5. An apparatus as claimed in any preceding claim comprising communication means arranged to permit a life schedule of the user to be downloaded the storage means.

6. A method of displaying a menu for a navigation system comprising:
storing a user attribute of at least one user; and
determining a menu for display with the navigation device in dependence on a stored user attribute for a single user.

7. A method as claimed in claim 6 comprising displaying the menu determined on the basis of the stored user attribute for the single user.

8. A method as claimed in claim 6 or claim 7 wherein storing a user attribute of at least one user further includes storing at least one user attribute for each of a plurality of users, the method comprising switching the menu for display corresponding to a user attribute of a second user.

9. A method as claimed in any of claims 6 to 8 wherein the at least one user attribute includes at least one of a respective occupation and a life schedule of the or each user.

10. A method as claimed in claim 9 comprising downloading the life schedule of at the or each user.

11. A vehicle having an apparatus or adapted to use a method as claimed in any preceding claim.
